# DEMANDE DE BREVET EUROPEEN

(11) **EP 0 722 027 A1**
(43) Date de publication de la demande: **17.07.1996**
(21) Numéro de dépôt: 96440004.8
(22) Date de dépôt: 15.01.1996
(51) Int. Cl.: E04F 13/14, B44F 1/04, B32B 17/12, B32B 17/10

(54) **Procédé de fabrication et de pose de panneaux décoratifs en verre**

(30) Priorité: 13.01.1995 FR 9500474
(71) Demandeur: Cartheret, Patricia, 51460 L'Epine (FR)
(72) Inventeur: Cartheret, Patricia, 51460 L'Epine (FR)
(74) Mandataire: Dénoyez, Hubert

(57) **Abrégé**

On applique sur des plaques de verre (2) une première couche d'un produit translucide (3) servant de support de colorants, puis, après séchage de cette première couche, une deuxième couche formée d'un liant (4) à base de ciment blanc ou gris servant à solidariser les plaques de verre (2) à la paroi (1) à recouvrir.

## Description

La présente invention a pour objet, dans le domaine du bâtiment, un procédé de fabrication et de pose de panneaux décoratifs, intérieurs ou extérieurs, en verre.

La présente invention a notamment pour but de proposer un procédé permettant le recouvrement d'une paroi, intérieure ou extérieure, au moyen de panneaux de verre.

On connaît déjà de nombreux procédés et dispositifs permettant d'utiliser le verre pour recouvrir des parois, en vue de bénéficier de ses propriétés avantageuses, notamment son inaltérabilité.

Ainsi le procédé décrit dans le document SU-A-1.719.218 fait appel à une composition à base de ciment Portland blanc et de verre, mais cette composition présente l'inconvénient d'être sensible aux changements de températures.

Le procédé décrit dans le document JP-A-2.204.567 met en oeuvre un film synthétique sur lequel on applique une résine adhésive chargée de poudre de verre, l'ensemble étant destiné à permettre la fixation d'éléments décoratifs sur du verre. Ce procédé a toutefois l'inconvénient d'être relativement onéreux.

D'autre part, dans la plupart des procédés connus, la difficulté réside dans les moyens permettant l'accrochage de panneau de verre sur une paroi.

La présente invention vise à remédier à ces divers inconvénients en proposant un procédé de recouvrement d'une paroi au moyen de panneaux décoratifs en verre, ledit procédé faisant appel à des moyens de fixation desdits panneaux qui sont d'une mise en oeuvre aisée et d'une très grande résistance aux différences de températures, permettant ainsi une utilisation aussi bien intérieure qu'extérieure.

Le procédé objet de la présente invention consiste essentiellement à appliquer sur des plaques de verre une première couche d'un produit translucide servant de support de colorants, puis après séchage et coloration de cette couche, une seconde couche d'un liant à base de ciment blanc ou gris, servant à la solidarisation des plaques de verre à la paroi à recouvrir.

Les plaques de verre mises en oeuvre dans le procédé selon l'invention peuvent être transparentes ou translucides, armées ou non armées, et présenter des épaisseurs et des dimensions variées.

La première couche, de produit translucide, appliquée sur la plaque de verre conformément au procédé selon l'invention, est réalisée à l'aide d'une dispersion aqueuse concentrée d'une résine synthétique présentant de bonnes qualités d'adhérence vis à vis du verre. A titre d'exemple de telles résines synthétiques on peut citer les copolymères vinyliques, et notamment les terpolymères d'éthylène, d'acétate de vinyle et de chlorure de vinyle.

Conformément au procédé selon l'invention, ladite première couche de résine synthétique est réalisée à l'aide d'une dispersion aqueuse concentrée de ladite résine, présente à raison d'environ 30 à 50 % en poids dans ladite dispersion aqueuse.

Le séchage de ladite dispersion aqueuse concentrée de résine synthétique donne lieu à la formation d'une couche translucide qui sert de support pour les colorants destinés à conférer au panneau de verre un aspect décoratif.

La seconde couche, de liant, mise en oeuvre dans le procédé selon l'invention, est réalisée à l'aide d'un liant composé pour environ 50 % de ciment blanc ou gris et pour environ 50 % d'un adjuvant constitué d'une dispersion aqueuse diluée d'une résine synthétique qui est avantageusement la même que celle mise en oeuvre pour réaliser la première couche.

Le liant obtenu par mélange de ces produits est adhérent et présente de bonnes propriétés plastiques. Il présente en outre une bonne tenue au feu et au gel, ce qui rend la paroi recouverte des panneaux de verre pratiquement inaltérable.

Pour réaliser la couche de liant, la résine synthétique mise en oeuvre est utilisée sous forme d'une dispersion aqueuse diluée dans laquelle elle est présente à raison d'environ 5 à 15 % en poids, l'eau contenue dans cette dispersion servant au gâchage du ciment.

Le procédé selon l'invention peut optionnellement comporter l'application, sur la couche de liant, d'une trame de fibre de verre destinée à conférer aux panneaux une plus grande résistance aux chocs et à éviter la chute de débris en cas de fracture.

Le procédé selon l'invention permet également de coller dos à dos deux panneaux de verre, afin de construire une paroi de séparation opaque utilisable intérieurement ou extérieurement, par exemple pour un abri-bus.

Les avantages et les caractéristiques de la présente invention ressortiront plus clairement de la description qui suit et qui se rapporte au dessin annexé, lequel en représente un mode de réalisation non limitatif.

Dans le dessin annexé :

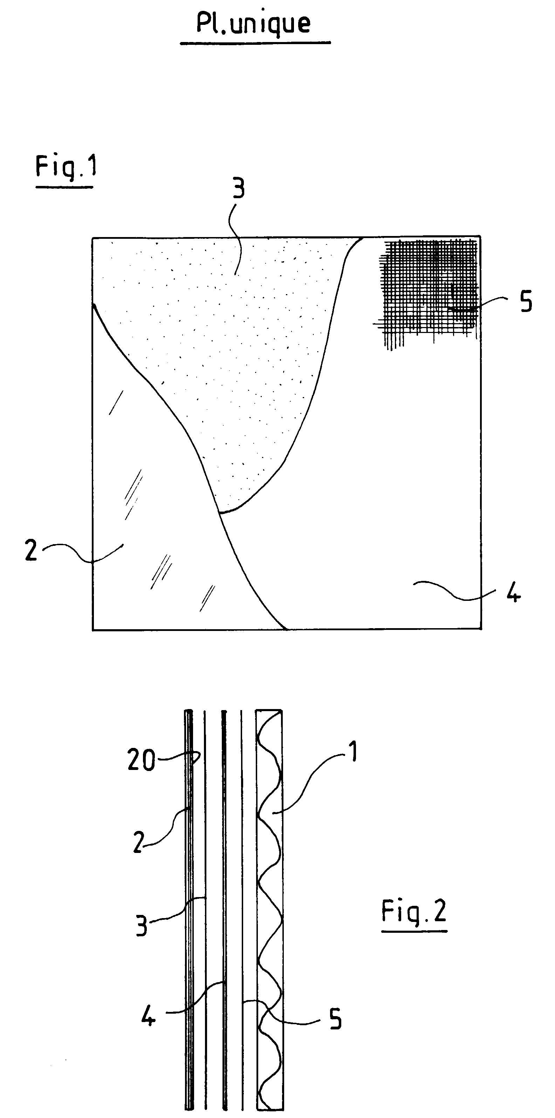

- la figure 1 représente une vue de face avec arrachés partiels d'un revêtement de paroi réalisé selon le procédé de l'invention.
- la figure 2 représente une vue en coupe et en éclaté du même revêtement.

Si on se réfère à ces figures on peut voir que le revêtement d'une paroi 1 réalisé selon le procédé de l'invention comprend en couches successives, de l'extérieur vers l'intérieur, une plaque de verre 2, une première couche d'un produit translucide 3, une deuxième couche de liant 4 et une trame 5 en fibre de verre.

Le produit translucide 3 peut être appliqué sur la face interne 20 de la plaque de verre 2 au moyen d'un pinceau, d'un rouleau ou d'un pistolet.

Après séchage naturel, ou accéléré par passage dans un tunnel à air chaud, il est possible d'appliquer mécaniquement ou manuellement, sur la couche 3, des colorants compatibles avec le produit translucide et le liant 4, en vue de réaliser des motifs décoratifs.

On peut ainsi appliquer sur la couche 3, après séchage, une peinture au rouleau, ou un décor réalisé à la peinture.

On peut aussi appliquer sur la couche 3 humide des paillettes ou des grains de marbre ou du verre pilé coloré, ou tout autre produit pouvant servir à la réalisation de motifs décoratifs.

Dans l'un ou l'autre cas, le liant est appliqué sur la couche 3 après séchage de cette couche, ou de la peinture appliquée dessus, puis la plaque de verre est appliquée contre la paroi à recouvrir, laquelle peut être une couche d'isolation du type polystyrène, liège ou autre matériau.

Le procédé selon l'invention permet, ainsi qu'il a déjà été dit, de réaliser facilement le recouvrement d'une paroi à l'aide de panneaux décoratifs qui présentent une excellente tenue tant vis à vis de la chaleur que du froid. Le revêtement ainsi réalisé est de ce fait pratiquement inaltérable.

## Revendications

1. Procédé de fabrication et de pose de panneaux décoratifs en verre, caractérisé en ce qu'il consiste à appliquer sur des plaques de verre (2) une première couche d'un produit translucide (3) servant de support de colorants, puis à appliquer sur cette couche, après séchage, une deuxième couche formée d'un liant (4) à base de ciment blanc ou gris servant à solidariser lesdites plaques de verre (2) à la paroi (1) à recouvrir.

2. Procédé selon la revendication 1 caractérisé en ce qu'on applique en outre une trame (5) de fibre de verre sur la couche de liant (4).

3. Procédé selon la revendication 1 ou la revendication 2, caractérisé en ce que la couche de produit translucide (3) est réalisée par application d'une dispersion aqueuse concentrée d'une résine synthétique présentant une bonne adhérence vis à vis du verre.

4. Procédé selon la revendication 3, caractérisé en ce que la résine synthétique mise en oeuvre est un copolymère vinylique, notamment un terpolymère d'éthylène, d'acétate de vinyle et de chlorure de vinyle.

5. Procédé selon la revendication 3, caractérisé en ce que la résine synthétique est présente dans la dispersion aqueuse à raison d'environ 30 à 50 % en poids.

6. Procédé selon l'une des revendications précédentes, caractérisé en ce que le liant (4) est composé d'environ 50% de ciment blanc ou gris et environ 50 % de ciment blanc ou gris et environ 50 % d'adjuvant constitué d'une dispersion aqueuse d'une résine synthétique.

7. Procédé selon la revendication 6, caractérisé en ce que la résine synthétique présente dans l'adjuvant est un copolymère vinylique.

8. Procédé selon la revendication 6, caractérisé en ce que la résine synthétique est présente dans l'adjuvant à raison d'environ 5 à 15 % en poids.
